# EUROPEAN PATENT APPLICATION

(11) **EP 1 410 957 A1**
(43) Date of publication of application: **21.04.2004**
(21) Application number: 03000681.1
(22) Date of filing: 16.01.2003
(51) Int. Cl.: B60R 21/20, B60R 21/16

(54) **Front pillar trim structure for curtain air bag of vehicle**

(30) Priority: 16.10.2002 KR 2002063244
(71) Applicant: Kia Motors Corporation, Seocho-gu, Seoul (KR)
(72) Inventor: Choi, Hyeong-ho, Gwangmyoung-shi, Kyunggi-do (KR)
(74) Representative: Viering, Jentschura & Partner

(57) **Abstract**

Disclosed is a front pillar trim structure for a curtain air bag (50) of a vehicle, comprising a front pillar trim (12) and a front pillar panel (14) provided on a lateral chassis of the vehicle and the curtain air bag (50) housed within the front pillar trim (12), wherein the front pillar trim (12) is provided with a step section where a portion of the front pillar trim (12) is downwardly folded; a fixing cap (20), taking a shape of a cylindrical body having been hollowed out, is seated in the step section; a spring member (40) has two free ends connected into fixing holes (24a) formed at the cylindrical body of the fixing cap (20), and a fixing screw (32); wound around by the spring member (40), is fastened through the front pillar panel (14) underneath the fixing cap (20) with a nut (34); whereby during the side collision accident, the front pillar trim (12) can be prevented from being disengaged from the front pillar panel (14) and the curtain air bag (50) can enclose the front door and rear door, including the window glass, owing to its easy deployment, thus securing the improved safety of the occupant(s) in case of an accident.

## Description

### BACKGROUND OF THE INVENTION

### Field of the Invention

The present invention relates to a front pillar trim structure of a vehicle, and more particularly, to a front pillar trim structure for a curtain air bag of a vehicle capable of insuring safety of one or more occupants by deploying a curtain air bag by a driver seat and a front passenger seat as well as by preventing a front pillar trim from being disengaged in the event of a side collision of a vehicle.

### Description of the Prior Art

Air bags have been studied since the 1970s and have been mounted on a Mercedes Benz car under mass production in 1986 for the first time. Also, air bags began to be popularized and globalized at a rapid speed for several reasons, in particular ever since the National Highway Traffic Safety Administration (NHTSA) in the USA made it mandatory to mount an air bag on all kinds of vehicles. For instance, in the case of Korea, air bags began to be mounted on vehicles on a large scale from the early 1990s.

Typically, the air bag is designed so that in case of a vehicular collision, an impact sensor operates to ignite harmless solid chemicals housed in the air bag, and sequentially to generate inflatable gases in the interval from 0.02 to 0.05 seconds to inflate the air bag with the inflatable gases, so that an occupant, such as a driver or a passenger, is prevented from directly hitting against a surrounded vehicular structure. As a result, even when a vehicle is seriously damaged in a crash, a vehicular occupant has a strong possibility of escaping injury or death, because the air bag acts to protect his (her) body, in particular, the head and chest.

In collision accidents, in particular, in the case of a side collision, loss of human life is very high. For example, the traffic accident figures in the USA show that casualties caused by side collisions of vehicles amount to 30% of the total casualties for a year. For this reason, a recent Mercedes Benz automobile model has mounted a curtain air bag on a side roofline in addition to a side air bag.

Such a curtain air bag has first been mounted in Korea in the middle of 2001 to a vehicle named EQUUS, and recently, it has been intensively recommended that it should be mounted to SUVs, which are vulnerable to turning over in a traffic accident.

With the curtain air bag, it is impossible for an occupant to be protected from risk of injury to a great enough extent, because the curtain air bag cannot cover a window corresponding to a driver seat and/or a front passenger seat, due to a structural defect of a front pillar trim. Also, the curtain air bag itself is sometimes not deployed, or sometimes even though the curtain air bag is deployed, the pillar trim is disengaged, doing much damage to the occupant, because the front pillar trim is secured by fasteners and screws.

### SUMMARY OF THE INVENTION

The present invention has been made to solve the foregoing problems and it is therefore an object of the present invention to provide a front pillar trim structure for a curtain air bag of a vehicle, capable of insuring safety of one or more occupants by deploying a curtain air bag by a driver seat and a front passenger seat as well as by preventing a front pillar trim from being disengaged in the event of a side collision of a vehicle.

In order to accomplish the above objects, the present invention provides a front pillar trim structure for a curtain air bag of a vehicle, comprising: a front pillar trim and a front pillar panel provided on a lateral chassis of the vehicle and the curtain air bag housed within the front pillar trim, wherein the front pillar trim is provided with a step section where a portion of the front pillar trim is downwardly folded; a fixing cap of the shape of a cylindrical body having been hollowed out, is seated in the step section; a spring member has two free ends connected into fixing holes formed in the cylindrical body of the fixing cap; and a fixing screw, which the spring member is wound around, is fastened through the front pillar panel underneath the fixing cap with a nut; whereby during a side collision accident, the front pillar trim can be prevented from being separated from the front pillar panel and the curtain air bag can enclose the front door and rear door or window glass owing to its easy deployment, thus securing the improved safety of the occupant(s) in case of accident.

It is preferred that a clip is provided at a connection portion between the fixing cap and the spring member so as to prevent disengagement of the spring member from the fixing cap.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a schematic view illustrating a lateral chassis of a van having a front pillar trim for a curtain air bag according to the present invention;
Fig. 2 is a sectional view taken along line II-II of Fig. 1;
Fig. 3 is a perspective view showing connectional relationship between a fixing cap and a fixing screw;
Fig. 4 is a sectional view illustrating deployment of a curtain air bag housed in a front pillar trim; and
Fig. 5 is a schematic view illustrating deployment of the curtain air bag of the van shown Fig. 1.

### DETAILED DESCRIPTION OF THE PREFERRED EMBODIMENT

A preferred embodiment of the invention will be described in detail below with reference to the accompanying drawings.

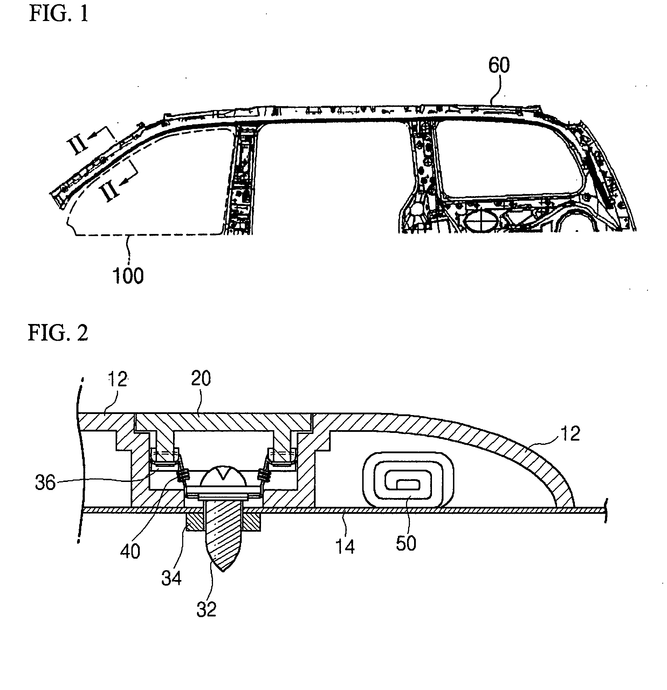

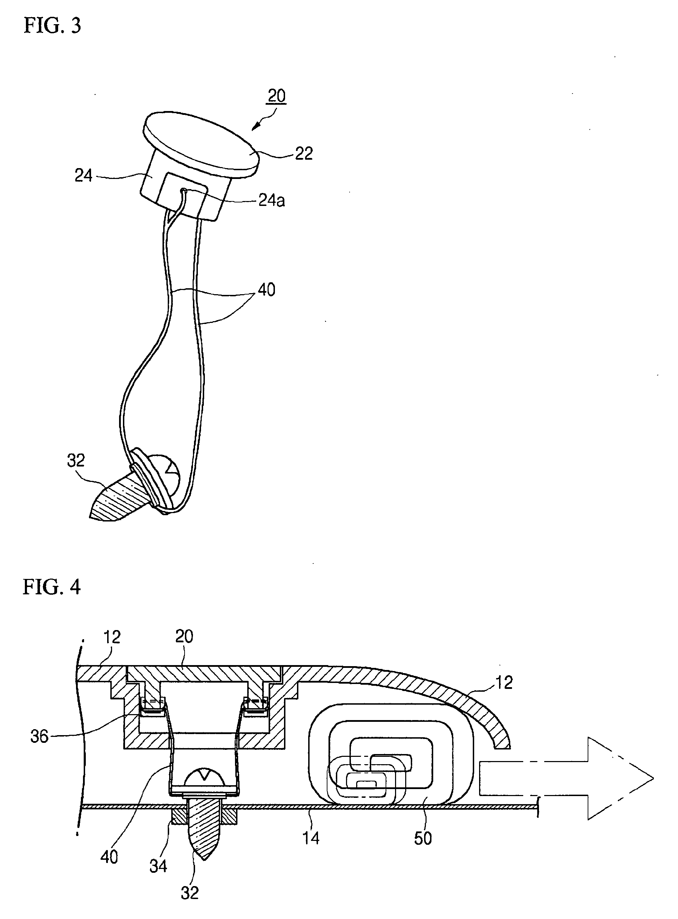

Fig. 1 is a schematic view illustrating a lateral chassis of a van having a front pillar trim for curtain air bags according to the present invention, Fig. 2 is a sectional view taken along line II-II of Fig. 1, and Fig. 3 is a perspective view showing the connectional relationship between a fixing cap and a fixing screw.

Referring to Figs. 1 to 3, a front pillar trim for curtain air bags according to the present invention is designed so that the curtain air bag, housed within a lateral chassis in a vehicle, such as a van, is deployed downward through a head lining and the front pillar trim in the event of a side collision, thus protecting an occupant, such as a driver or a fellow passenger, from injury. Here, a numeral reference 100, not described, is front door glass.

The front pillar trim 12 is provided with a step section, which is downwardly folded toward a front pillar panel 14. The curtain air bag 50 is housed in a space between the step section and an end closely contacted with the front pillar panel 14.

A fixing cap 20 is designed so that its circular head 22 is disposed on a first or upper step of the step section of the aforementioned front pillar trim 12, and its cylindrical body 24 extends downwardly around the edge of the circular head 22. Therefore, the fixing cap 20 takes a shape of a cylindrical body having been hollowed out.

A spring member 40 has two free ends connected to fixing holes 24a, which are formed at the cylindrical hollow body 24 of the fixing cap 20. Further, the free ends of the spring member 40 can be more strongly attached to the cylindrical hollow body 24 of the fixing cap 20 by a clip 36.

A fixing screw 32 is adapted to fasten the front pillar trim 12 to the front pillar panel. Specifically, a threaded body of the fixing screw 32 passes through both a second or lower step of the step section of the front pillar trim 12 and the front pillar panel 14, and then is threaded with a nut 34. However, a head of the fixing screw 32 can pass throughw a second or lower step of the step section of the front pillar trim 12, but not the front pillar panel 14. Here, since it is preferred that the fixing screw 32 elastically supports the front pillar trim 12 and the front pillar panel 14, the fixing screw 32 is fastened together with the spring member 40 which is made of wire material and wound around the fixing screw with at least one turn.

Referring to Fig. 4 illustrating deployment of the curtain air bag 50 when a side collision of a vehicle takes place, the curtain air bag 50 is initially caused to be inflated with inflatable gases by means of an impact sensor, not shown, which senses a side impact caused by a side collision of the vehicle. At the same time, the spring member 40, biased between the cylindrical body 24 of the fixing cap 20 and the front pillar panel 14, stretches out. Therefore, the front pillar trim 12 is spaced apart from the front pillar panel 14 at a proper distance without completely separating from the front pillar panel 14, so that the curtain air bag 50 can be easily deployed in a predetermined direction.

Then, the curtain air bag 50 is deployed only in a predetermined deployment direction (in a direction indicated by an arrow), but not deployed in a direction opposite to the deployment direction owing to the wire of the stretched spring member 40. As a result, the curtain air bag can be prevented from being incompletely deployed, which has occurred with the conventional curtain air bag.

Moreover, in the present invention it is no longer necessary to utilize a fixing means, such as a fastener, a screw and so forth. Therefore, the present invention has an advantage in that the front pillar trim 12 is elastically spaced away from or made to contact with the front pillar panel 14 by the spring member 40, without being disengaged from the front pillar panel 14.

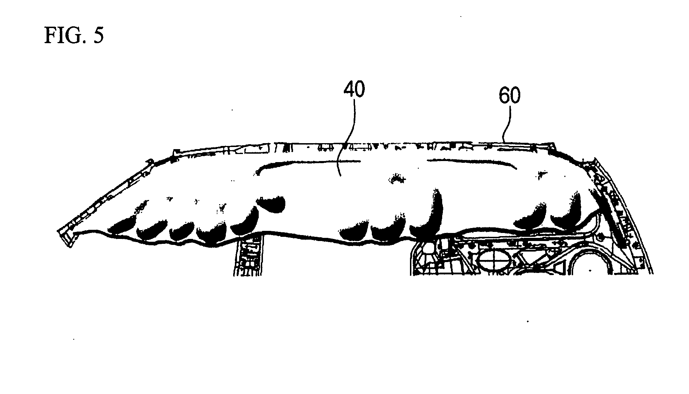

As shown in Fig. 5, when a vehicle, such as a van, is subjected to a side collision, the curtain air bag 50 is capable of being deployed enough to cover all the front door glass surrounding the driver's seat and the front passenger's side seat, let alone all the rear door or window glass surrounding the rear seats. Therefore, even though the glass is broken in the side collision accident, secondary injury caused by the impact which causes a driver and a fellow passenger to be expelled from the vehicle can be thoroughly prevented.

As seen from the above, during the side collision accident, the present invention is designed not only to prevent the-front pillar trim from being disengaged from the front pillar panel, but also to allow the curtain air bag to be easily deployed, thus enclosing the front door and rear door, including the window glass, so that it can secure the improved safety of the occupant(s) in case of accident.

In addition, the present invention can provide a more simplified process for assembling the front pillar trim by integrally forming the fixing screw and the fixing cap.

While the present invention mentioned above has been shown and described in connection with the preferred embodiment, it is intended that the present invention is not limited to the foregoing embodiment but those skilled in the art can make various modifications and variations without departing from the principle of the invention as defined in the appended claims.

For example, the spring member may be made of strip material in place of wire, the step section of the front pillar trim or the fastening means consisting of the fixing screw and the nut may also have modifications made regarding their geometry.

## Claims

1. A front pillar trim structure for a curtain air bag of a vehicle, comprising:
a front pillar trim and a front pillar panel provided on a lateral chassis; and
the curtain air bag housed within the front pillar trim,
wherein the front pillar trim is provided with a step section where a portion of the front pillar trim is downwardly folded; a fixing cap, taking a shape of a cylindrical body having been hollowed out, is seated in the step section; a spring member has two free ends connected into fixing holes formed at the cylindrical body of the fixing cap; and a fixing screw, which the spring member is wound around, is fastened through the front pillar panel underneath the fixing cap with a nut.

2. A front pillar trim structure in accordance with claim 1, a connection portion between the spring member and the fixing cap is clamped by a clip so as to prevent disengagement of the spring member from the fixing cap.
